# EUROPÄISCHE PATENTSCHRIFT

(11) **EP 0 386 495 B1**
(45) Veröffentlichungstag und Bekanntmachung des Hinweises auf die Patenterteilung: **27.10.1993**
(21) Anmeldenummer: 90102869.6
(22) Anmeldetag: 14.02.1990
(51) Int. Cl.: B60H 3/00

(54) **Kraftfahrzeug mit einem Sicherheitssystem**
Motor vehicle with a security system
Véhicule automobile avec système de sécurité

(30) Priorität: 04.03.1989 DE 3907049
(43) Veröffentlichungstag der Anmeldung: 12.09.1990
(73) Patentinhaber: Bayerische Motoren Werke Aktiengesellschaft, 80788 München (DE)
(72) Erfinder: Strobl, Wolfgang, D-8078 Eichstätt (DE); Pehr, Klaus, D-8901 Stadtbergen (DE)

(56) Entgegenhaltungen:
- DE-A- 2 941 305
- DE-A- 3 526 462
- DE-A- 3 731 745
- FR-A- 2 258 627

## Beschreibung

Die Erfindung betrifft ein Fahrzeug mit einem Sicherheitssystem gemäß dem Oberbegriff des Anspruchs 1.

Es ist bereits die Verwendung von Gassensoren in Fahrgasträumen, beispielsweise aus der DE-OS 35 05 670, bekannt, deren Aufgabe aber darin besteht, daß bei einem Auftreten einer erhöhten Schadstoffkonzentration in der Außenluft die Luftzufuhr in den Fahrzeuginnenraum abgeschaltet wird. Nicht berücksichtigt wird dabei die Möglichkeit, daß im Fahrzeug mitgeführte Treibstoffe aus ihrem Behälter austreten, wodurch giftige und/oder brennbare Gaskonzentrationen im Fahrzeuginnenraum oder im Kofferraum entstehen können.

Aus der DE-A-35 26 462 ist ein Apparat und ein Verfahren zur Kontrolle der Luftgüte in Kraftfahrzeugen bekannt, bei dem sowohl beim fahrenden als auch beim abgestellten Fahrzeug die Qualität der Innenluft in der Fahrzeugkabine durch einen Innenluftsensor und durch einen Außenluftsensor überwacht wird. Der Außenluftsensor schließt die Frischluftklappen bei der Überschreitung eines frei wählbaren Schadstoffpegels der Außenluft. Der Innenluftsensor überwacht die Luftgüte im Fahrzeuginnenraum und ist demzufolge an einem Ort angebracht, der als repräsentativ für die Qualität der Luft im Innenraum zu gelten hat. Die von dem Außenluftsensor und dem Innenluftsensor ermittelten Werte werden miteinander verglichen und bei Überschreitung des gewählten Schadstoff-Sollwertes werden entweder die Öffnungen des Fahrzeuges geöffnet oder geschlossen, je nachdem ob die Luftgüte außerhalb des Fahrzeuges oder innerhalb des Fahrzeuges besser als der vorgewählte Schadstoff-Sollwert ist. Zu den berücksichtigten Schadstoffen gehören auch die beim Verdampfen von Kraftstoff entstehenden Kohlenwasserstoffdämpfe, die sich auch im Fahrzeuginnenraum bilden können. Durch das Auftreten von Kohlenwasserstoffdämpfen besteht jedoch die Explosionsgefahr erst bei einer relativ hohen Konzentration, die durch die Geruchsbelästigung bereit vorher wahrgenommen wird.

Aufgabe der Erfindung ist es, ein Fahrzeug mit einem Sicherheitssystem zu schaffen, das die Betriebssicherheit eines Fahrzeuges erhöht und vor der Bildung zündfähiger Gaskonzentrationen in den geschlossenen Räumen des Fahrzeuges schützt.

Diese Aufgabe wird erfindungsgemäß durch die Merkmale des kennzeichnenden Teils des Anspruchs 1 gelöst.

Durch das Sicherheitssystem können große Mengen eines Treibstoffes, der in Verbindung mit Umgebungsluft in geschlossenen Räumen ein zündfähiges Gemisch bildet, relativ schnell und gefahrlos an die Umgebungsluft abgeführt werden, wo sie sehr schnell unschädlich werden. Durch den Verzicht auf eine Totalkapselung des Treibstoffsystems und auf eine gasdichte Kapselung des Fahrgastraumes entstehen bedeutende Kosten- und Gewichtsvorteile. Die Abdichtung des Fahrgastraumes gegenüber dem Kofferraum erfolgt unter Abwägung von Kosten und Nutzen. Das Sicherheitssystem wird insbesondere dann eingesetzt, wenn der verwendete Treibstoff durch die menschlichen Sinnesorgane nicht wahrnehmbar ist. Diese Faktoren treffen beispielsweise auf Wasserstoff zu, der geschmackslos, geruchslos und farblos ist. Ferner weist Wasserstoff gegenüber konventionellen kohlenwasserstoffhaltigen Treibstoffen den sicherheitstechnischen Nachteil der weiten Zündgrenzen in der Luft und der niedrigen Zündenergie auf. Durch die Zufuhr frischer Außenluft in die ansonsten im wesentlichen geschlossenen Räume des Fahrzeuges, d.h. den Fahrgastraum und den Kofferraum, bleibt die Wasserstoffkonzentration in den Fahrzeugräumen im Mittel unterhalb der unteren Zündgrenze, die ungefähr bei 4 % Wasserstoff in der Luft liegt. Da Wasserstoff ca. 15 mal leichter als Luft ist und daher einen entsprechenden Auftrieb hat, wird der Sensor oberhalb des Treibstofftankes im Fahrgastraum am Dachhimmel und im Kofferraum in der Nähe des Treibstoffbehälters an der höchsten Stelle der Kofferraumabdeckung angeordnet sein. Bildet der austretende Treibstoff in der Umgebungsluft ein Gas, das schwerer als Luft ist, müssen die Sensoren in der Fahrzeugbodennähe angeordnet sein. Das Sicherheitssystem kann jedoch auch für den Fall eingesetzt werden, daß die das Fahrzeug umgebende Außenluft eine hohe Schadstoffkonzentration aufweist, so daß die Schutzeinrichtung des Sicherheitssystems bei einer Überschreitung einer zulässigen Schadstoffkonzentration die Be- und Entlüftungsöffnungen des Fahrzeuges automatisch in Abhängigkeit vom Sauerstoffgehalt im Fahrgastraum vorübergehend schließt. Die Belüftung des Fahrgastraumes bzw. des Kofferraumes kann durch die Verwendung eines Gebläses bzw. eines Ventilators erhöht werden. Gleichzeitig mit der Frischluftzufuhr in die ansonsten geschlossenen Räume des Fahrzeuges, wird die Treibstoffentnahme aus dem Tank des undichten Treibstoffversorgungssystems abgeschaltet. Durch die Möglichkeit der Umschaltung auf ein zweites Treibstoffversorgungssystem ist es möglich, das Fahrzeug ohne Leistungseinbruch aus einer eventuellen Gefahrenzone zu steuern. Zur Vermeidung der Explosionsgefahr bei Auffahrunfällen ist ein Beschleunigungssensor am Fahrzeug angeordnet, der bei einer Überschreitung einer unzulässigen hohen Beschleunigung ein Signal abgibt, durch das über eine elektronische Schaltung die Türen entriegelt, und die Seitenfenster, das Schiebedach sowie die Kofferraumklappe geöffnet werden. Ferner ist von Vorteil, daß sich bei einer unzulässigen Verformung des Fahrzeughecks ohne Zwischenschaltung von Antriebsmotoren allein aufgrund von konstruktiven Maßnahmen die Kofferraumklappe öffnet. Dies kann beispielsweise durch eine besondere Gestaltung des Kofferraumklappenschlosses bewirkt werden, das beispielsweise eine Sollbruchstelle aufweisen kann und/oder bei dem das Verschließteil bei einer unzulässigen Verformung in Richtung Fahrgastraum verschwenkt wird. Weitere konstruktive Maßnahmen betreffen die Form der Kofferraumklappe bzw. die Anordnung der Federn an den Anlenkpunkten der Kofferraumklappe. Von Vorteil ist ferner, daß die als Spannungsquelle verwendete Batterie durch die Schutzeinrichtung des Sicherheitssystems nicht übermäßig belastet wird, so daß die Schutzeinrichtung auch über längere Stillstandzeiten des Fahrzeuges ständig in Betrieb sein kann. Sollte aus irgendwelchen Gründen die Versorgungsspannung unterhalb eines gewählten Wertes sinken, werden automatisch die Kofferraumklappe, die Seitenfenster, das Schiebedach usw. geöffnet. Um den Fahrer selbst auf das Auftreten von kritischen Gaskonzentrationen aufmerksam zu machen, enthält die Schutzeinrichtung optische und akustische Warneinrichtungen. Diese Warnsignale können bereits vor dem Öffnen der Fenster usw. abgegeben werden, so daß unerwünschte Reflexhandlungen des Fahrers vermieden werden. Entsprechend können zu Beginn der Belüftung des Fahrgastraumes zunächst die hinteren Seitenfenster geöffnet werden. Die Bauteile der elektronischen Schaltung sind relativ klein und handlich, so daß eine einfache Unterbringung der Schaltungsbauteile im Fahrzeuginnenraum möglich ist. Von Vorteil ist auch, daß das Sicherheitssystem in einfacher Weise an den Kabelbaum und die Fahrzeugelektronik anschließbar ist, so daß keine zusätzlichen Leitungen zur Ansteuerung, beispielsweise der Elektromotoren zur Betätigung des Schiebedaches und der Fenster, verlegt werden müssen. Zudem enthält das Fahrzeug einen Ventilblock, der außerhalb des Tankes angeordnet ist und der sämtliche zur Inertisierung, Betankung und Motorversorgung notwendigen Magnet- und Rückschlagventile enthält. Durch die Anordnung eines Ventilblockes außerhalb des Tankes wird der Wärmeeinfall in den Tank minimiert und die Wartungsfreundlichkeit gewährleistet. Ferner reduzieren kurze Leitungslängen zwischen den Ventilen Toträume, in denen sich Verunreinigungen sammeln können und außerdem werden durch die kurzen Leitungslängen Verdampfungsverluste während des Betankungsvorganges vermindert. Schließlich kann über den Ventilblock gasförmiger Wasserstoff ins Freie austreten.

Eine Ausführungsform der Erfindung wird nachstehend anhand der Zeichnungen beispielshalber dargestellt. Dabei zeigen:
- Fig. 1: eine Ansicht von oben auf den Grundriß eines Fahrzeuges, in dem der grundsätzliche Aufbau des Sicherheitssystems gezeigt ist und
- Fig. 2: einen Schaltplan des Sicherheitssystems.

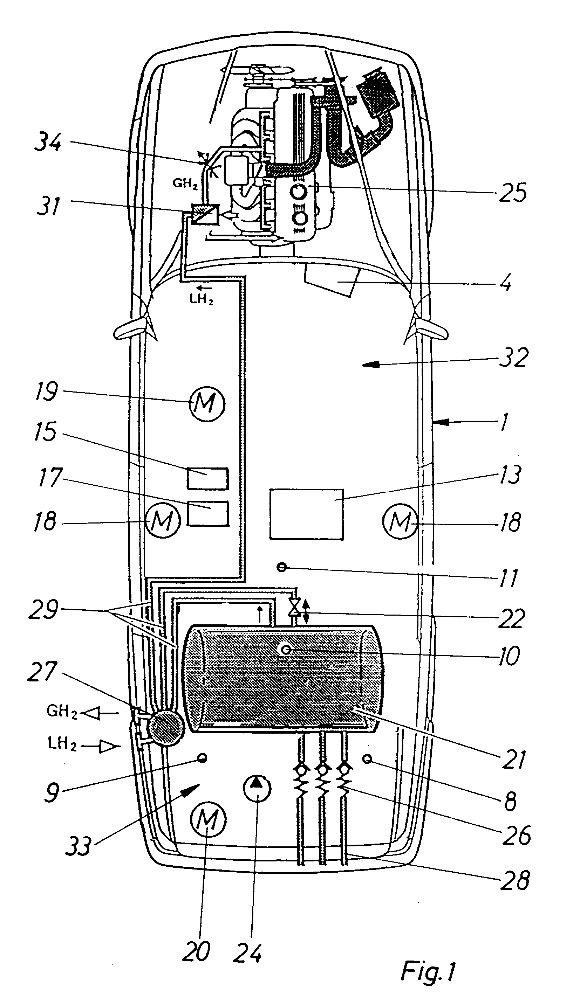

Fig. 1 zeigt ein mit Wasserstoff angetriebenes Fahrzeug 1. Ein Treibstofftank 21 ist aufgrund des erforderlichen Volumens und der angestrebten Aufprallsicherheit über der Hinterachse im Kofferraum des Fahrzeuges eingebaut. Der Treibstofftank 21 enthält im vorliegenden Fall flüssigen Wasserstoff. Zur Vermeidung von Kälteverlusten ist der Tank doppelwandig und vakuumsuperisoliert. Aus sicherheitstechnischen Gründen weist der Tank eine zylindrische Form auf. Der trotz der aufwendigen Isolation auftretende Restwärmeeinfall bedingt ein stetiges Verdampfen von Wasserstoff. Bei einem stehenden Fahrzeug werden dadurch maximal 2 % der Füllung pro Tag über Überström- und Sicherheitsventile 26 an die Umgebung freigesetzt, wobei die Überström- und Sicherheitsventile 26 in Leitungen 28 eingebaut sind, die zum Heck des Fahrzeuges führen. Am Treibstofftank 21 sind weitere Leitungen 29 angeschlossen, die zum einen zum Betanken und zur Entnahme von flüssigem Wasserstoff und zum anderen zum Freisetzen von verdampftem Wasserstoff dienen. In unmittelbarer Nähe des Treibstofftankes 21 ist ein elektrisch betätigbares Ventil 22 angeordnet, durch das im Notfall der Treibstofftank 21 abgesperrt werden kann. Die sich an das Ventil 22 anschließende Leitung führt zu einem vakuumisolierten Ventilblock 27, der sämtliche zur Inertisierung, Betankung und Motorversorgung notwendigen Magnet- und Rückschlagventile enthält. In einer weiteren Ausführungsform ist das Ventil 22 im Ventilblock 27 angeordnet. Wasserstofführende Bauteile, die an der Fahrzeugaußenhaut liegen, wie Sicherheitsventile und Tankstutzen, sind über flexible Elemente mit dem Treibstoffleitungssystem verbunden, um Verformungen ausgleichen zu können. Das Kraftstoffleitungssystem zwischen Ventilblock 27 und Motor 25 ist am Wagenunterboden, soweit möglich, auffahrsicher im Schutz der Fahrzeugträger verlegt und vor mechanischer Beschädigung, z.B. Steinschlag, geschützt. Der flüssige, tiefkalte Treibstoff wird mittels des Tankdruckes durch einen Kühlwasser-Wasserstoff-Wärmetauscher 31 gefördert, dort verdampft und einem zentralen Dosierventil 34 zugeleitet, welches elektrisch betätigt wird. Das Dosierventil bildet eine kompakte Einheit mit der Verteileranlage für die saugrohrindividuelle Einblasung, so daß die Gefahr von Wasserstoffleckagen weitgehend ausgeschlossen ist.

Da Wasserstoff ein brennbares Gas ist und bei einer Konzentration von ca. 4 % Wasserstoff in der Luft die untere Zündgrenze hat, sind zur Feststellung von Wasserstoff Sensoren 8, 9, 10 sowohl im Kofferraum 33 als auch im Fahrgastraum 32 angeordnet. Die Anordnung der Sensoren erfolgt an einer solchen Stelle, an der sich aufgrund der physikalischen Eigenschaften des Gases und der Form des geschlossenen Raumes zuerst entsprechende Ansammlungen von Gaskonzentrationen bilden können. Da Wasserstoff ca. 15 mal leichter als Luft ist, steigt austretender Wasserstoff relativ schnell nach oben. Wasserstoffnester bilden sich somit in der Regel oberhalb des Treibstofftankes 21 an der höchsten Stelle des Kofferraumes bzw. des Fahrgastraumes. Im vorliegenden Fall ist der Sensor 10 im Fahrgastraum 32 am oberen Ende des nicht abgebildeten Heckfensters ungefähr in Fahrzeugmitte angeordnet. Entsprechend sind die Sensoren 8 und 9 in der Nähe des Treibstofftankes 21 im Kofferraum angebracht. Der Sensor 9 ist fest in der Nähe des Ventilblockes 27 am seitlichen Ende des in Querrichtung des Fahrzeuges liegenden Treibstofftankes 21 angeordnet. Der Sensor 8 ist lösbar aus seiner Halterung an einem Stab befestigt, so daß die wasserstofführenden Bauteile, insbesondere die Leitungen 28 und 29, mittels des Sensors 8 auf ihre Dichtigkeit hin überprüft werden können.

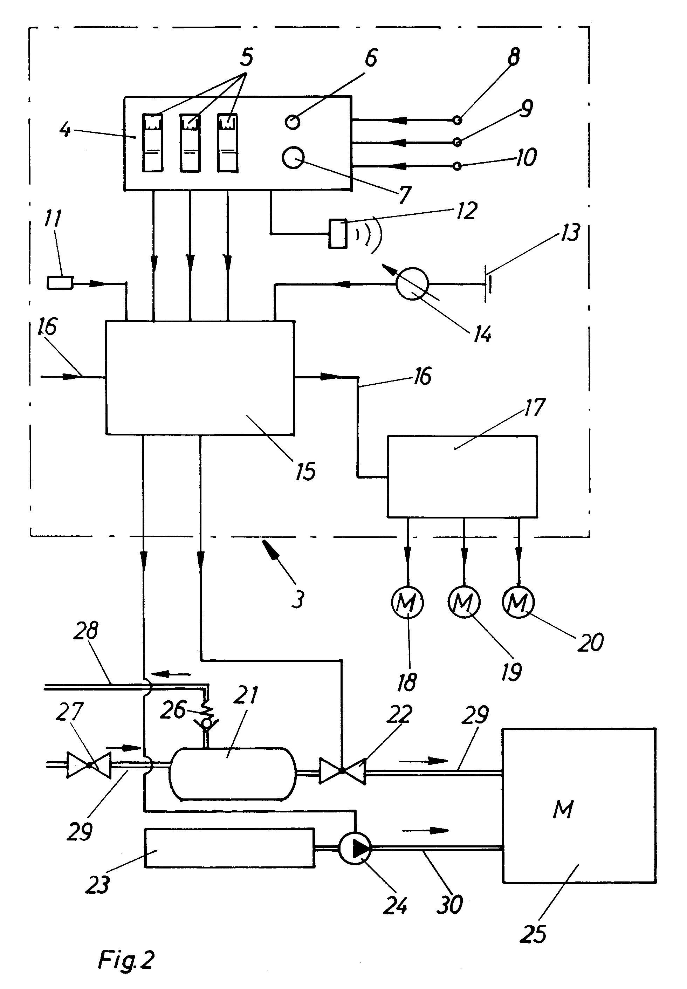

In der Fig. 2 sind ferner die wesentlichen Teile einer Schutzeinrichtung abgebildet, die aus einer elektronischen Schaltung 3 und die durch die elektronische Schaltung im Gefahrenfall betätigten Verstellmotoren 18, 19 und 20 sowie aus dem elektrisch betätigbaren Ventil 22 und einer Benzinpumpe 24 besteht. Die elektronische Schaltung 3 weist ein Anzeige- und Warngerät 4 auf, das sich im Sichtbereich des Fahrers am Armaturenbrett befindet. Das Warngerät 4 erhält ständig oder in kurzen Zeitabständen Signale der Sensoren 8, 9 und 10. Diese Signale werden im Warngerät 4 in der Weise verarbeitet, daß entsprechend einem einstellbaren Gaskonzentrationswert Signale an ein Steuergerät 15 abgegeben werden. Der angegebene Grenzwert liegt deutlich unter der unteren Explosionsgrenze. Jedoch darf dieser Grenzwert nicht zu niedrig eingestellt werden, da sonst aufgrund der in der Umgebungsluft enthaltenen Gase, beispielsweise Benzindämpfe usw., das Warngerät 4 unnötigerweise anspricht und die weiter unten beschriebenen Maßnahmen auslöst. Die von den Sensoren 8, 9 und 10 gemessenen Werte werden jeweils an einer Anzeige 5 angegeben. Zur Vorwarnung des Fahrers ist am Warngerät 4 eine Warnlampe 7 sowie eine Hupe 12 angebracht. Ferner weist das Warngerät 4 eine Quittier- oder Resettaste 6 auf.

Wird der eingestellte Grenzwert überschritten, gibt das Warngerät 4 Signale an ein Steuergerät 15 ab, das in den im Fahrzeug befindlichen Motorkabelbaum 16 mittels einer Steckverbindung zwischengeschaltet ist. Das Steuergerät 15 simuliert das Drücken von Betätigungsschaltern, so daß automatisch über eine im Fahrzeug 1 befindliche und an das Steuergerät 15 angeschlossene zentrale Karosserieelektronik 17 Motoren 18, 19 und 20 zum Öffnen oder Schließen der Seitenfenster, des Schiebedaches und der Kofferraumklappe betätigt werden. Zur Vermeidung unerwünschter Reflexhandlungen des Fahrers werden zunächt die hinteren Fenster geöffnet bzw. geschlossen und die Stellmotoren für die vorderen Fenster bleiben unbetätigt. Zum Belüften des Fahrzeuginnenraumes kann ferner automatisch die Hutablage aufklappbar sein und im Gefahrenfall zusammen mit der Kofferraumklappe geöffnet werden. Zur Feststellung der Schadstoff- und Gaskonzentration kann ferner ein Sensor im Ansaugkanal der Heizungs- und/oder Lüftungsanlage angeordnet sein, der an die elektronische Schaltung 3 angeschlossen ist.

Wird beispielsweise im Fahrgastraum 32 die eingestellte Wasserstoffkonzentrationsgrenze während des Fahrbetriebes oder bei Standzeiten überschritten, werden die Fenster und das Schiebedach geöffnet. Während des Fahrbetriebes gibt das Steuergerät 15 gleichzeitig ein Signal an das am Treibstofftank 21 angeordnete Ventil 22 ab, durch das das Ventil 22 geschlossen wird. Gleichzeitig erfolgt eine automatische Umschaltung des Motorbetriebs auf einen konventionellen Kraftstoff durch Inbetriebnahme einer Pumpe 24, damit das Fahrzeug ohne Leistungseinbruch aus einer eventuellen Gefahrenzone gesteuert werden kann.

Tritt eine nicht mehr zulässige Wasserstoffkonzentration im Kofferraum 33 des Fahrzeuges 1 auf, sprechen die Sensoren 8 und/oder 9 an und die Kofferraumklappe wird automatisch über den Motor 20 spaltweise geöffnet.

Zur Verhinderung gefährlich hoher Wasserstoffkonzentrationen bei einem schweren Verkehrsunfall durch die Beschädigung des Kraftstoffsystems ist an der Fahrzeugkarosserie ein Sensor 11 befestigt, der eine unzulässig hohe Fahrzeugbeschleunigung erkennen kann. Bei einem Aufprall gibt der Sensor 11 Signale an das Steuergerät 15 ab, das über die zentrale Karosserieelektronik 17 und die dadurch betätigten Motoren 18, 19 und 20 die Seitenfenster, das Schiebedach und die Kofferraumklappe öffnet. Ferner werden automatisch die Türen entriegelt. Außerdem wird wie oben beschrieben das Ventil 22 geschlossen.

Das Kofferraumklappenschloß, die Struktur der Kofferraumklappe und die Federn an den Anlenkpunkten der Kofferraumklappe sind derart konstruiert, daß bei einer unzulässigen Verformung der Fahrzeughinterseite ohne zusätzliche Energieeinleitung automatisch ein Spalt zur Umgebungsluft hin freigegeben wird. Beispielsweise kann das Kofferraumklappenschloß mit einer Sollbruchstelle versehen sein und/oder als eine Drehfalle ausgebildet sein, die sich bei einer unzulässigen Verformung von selbst aus der Verriegelungsstellung bewegt.

Die Stromversorgung der Schutzeinrichtung erfolgt über eine Fahrzeugbatterie 13. In den Stromkreis zum Steuergerät 15 ist ein Spannungsmeßgerät 14 zwischengeschaltet. Die komplette Schutzeinrichtung ist so ausgelegt, daß die elektrische Leistungsaufnahme so gering ist, daß die Schutzeinrichtung auch während üblicher Fahrzeugabstellphasen von bis zu zwei Wochen ständig in Betrieb sein kann. Bei Unterschreitung eines bestimmten Wertes der Versorgungsspannung, der durch das zwischengeschaltete Spannungsmeßgerät 14 überprüft wird, werden automatisch die Fenster, das Schiebedach und die Kofferraumklappe geöffnet.

Bei einer Überschreitung einer durch die Außenluft verursachten Schadstoff- und/oder Gaskonzentration im Fahrgastraum 32, die durch den oben genannten im Ansaugkanal der Lüftungsanlage angeordneten Sensor gemessen wird, werden vorübergehend in Abhängigkeit vom Sauerstoffgehalt im Fahrgastraum 32 die Fenster, das Schiebedach sowie die sonstigen Außenlufteintrittsöffnungen verschlossen.

## Patentansprüche

1. Kraftfahrzeug(1) mit einem Sicherheitssystem, mit einem im Fahrzeug eingebauten Treibstoffversorgungssystem, das einen brennbaren und/oder giftigen Treibstoff enthält, der mit Umgebungsluft ein zündfähiges Gemisch bilden kann, wobei die Messung der Schadstoff- und/oder Treibstoffgaskonzentration durch Sensoren (8,9,10) erfolgt, wobei Treibstoffgase aus dem Treibstoffversorgungssystem des Fahrzeuges entweichen und jeder Sensor (8,9,10) ab einer bestimmten Konzentration an unverbranntem Treibstoff Signale erzeugt, wobei die Sensoren (8,9,10) an eine elektronische Schaltung (3) angeschlossen sind, die in Abhängigkeit von der Höhe der gemessenen Treibstoffkonzentration die beweglichen Teile betätigt, durch die die Öffnungen von Kraftfahrzeugräumen verschließbar sind, dadurch gekennzeichnet,
daß in den Räumen (32, 33) des Fahrzeuges (1) jeweils mindestens ein Sensor (8, 9, 10) an einer Stelle angebracht ist, an der sich aufgrund der physikalischen Eigenschaften des Treibstoffes sowie der räumlichen Gegebenheiten zuerst Treibstoffgase und/oder deren Mischungen mit der Umgebungsluft ansammeln und daß über eine elektronische Schaltung (3) gleichzeitig mit einer Frischluftzufuhr in die ansonsten geschlossenen Räume (32, 33) des Fahrzeugs (1) eine Abschaltung der Treibstoffentnahme des undichten Treibstoffversorgungssystems und eine Umschaltung auf ein zweites Treibstoffversorgungssystem (23) erfolgt.

2. Fahrzeug nach Anspruch 1, dadurch gekennzeichnet, daß der Treibstoff des ersten Treibstoffversorgungssystems Wasserstoff ist, daß die Sensoren (8, 9,10) bereits bei einem geringen Gehalt an Wasserstoff in der Umgebungsluft ansprechen, und daß die Sensoren (8, 9, 10) über die elektronische Schaltung (3) den Wasserstoffgehalt im Fahrgastinnenraum unterhalb der Explosionsgrenze von 4 % halten.

3. Fahrzeug nach den Ansprüchen 1 oder 2, dadurch gekennzeichnet, daß die Sensoren (8, 9) in der Nähe des Treibstofftankes (21) im Kofferraum (33) angeordnet sind.

4. Fahrzeug nach einem oder mehreren der vorhergehenden Ansprüche, dadurch gekennzeichnet, daß der Sensor (10) an der höchsten Stelle des Fahrgastraumes (32) vorgesehen ist.

5. Fahrzeug nach einem oder mehreren der vorhergehenden Ansprüche, dadurch gekennzeichnet, daß der Sensor (8) lösbar im Kofferraum (33) angeordnet ist.

6. Fahrzeug nach einem oder mehreren der vorgehenden Ansprüche, dadurch gekennzeichnet, daß mindestens ein Sensor zur Messung der Schadstoffkonzentration in der Außenluft am Fahrzeug (1) angeordnet ist.

7. Fahrzeug nach einem oder mehreren der vorhergehenden Ansprüche, dadurch gekennzeichnet, daß an die elektronische Schaltung (3) Verstellorgane (18, 19, 20) angeschlossen sind, die bei einer durch im Fahrzeug (1) austretenden Treibstoff verursachten Schadstoff- und/oder Gaskonzentration mindestens die Öffnungen des betreffenden Raumes ausreichend weit öffnen.

8. Fahrzeug nach einem oder mehreren der vorhergehenden Ansprüche, dadurch gekennzeichnet, daß die elektronische Schaltung (3) zum Belüften des betroffenen Raumes (32, 33) Gebläse und/oder Ventilatoren einschaltet.

9. Fahrzeug nach einem oder mehreren der vorhergehenden Ansprüche, dadurch gekennzeichnet, daß am Fahrzeug (1) mindestens ein weiterer Sensor (11) angebracht ist, der bei einer unzulässig hohen Beschleunigung des Fahrzeuges (1) Signale erzeugt und daß der Sensor (11) an die elektronische Schaltung (3) angeschlossen ist.

10. Fahrzeug nach einem oder mehreren der vorhergehenden Ansprüche, dadurch gekennzeichnet, daß bei einem Signal des Sensors (11) die elektronische Schaltung (3) die gleichen Belüftungsmaßnahmen auslöst, wie dies bei der Feststellung einer durch Treibstoff verursachten Schadstoff- und/oder Gaskonzentration der Fall ist und daß eine Entriegelung der Türen stattfindet.

11. Fahrzeug nach einem oder mehreren der vorhergehenden Ansprüche, dadurch gekennzeichnet, daß sich bei einer unzulässigen Verformung des Fahrzeughecks allein aufgrund konstruktiver Maßnahmen die Kofferraumklappe öffnet.

12. Fahrzeug nach einem oder mehreren der vorhergehenden Ansprüche, dadurch gekennzeichnet, daß die elektronische Schaltung (3) ständig in Betrieb ist und daß die elektrische Leistungaufnahme der elektronischen Schaltung (3) so gering ist, daß auch übliche Fahrzeugabstellzeiten überbrückbar sind.

13. Fahrzeug nach einem oder mehreren der vorhergehenden Ansprüche, dadurch gekennzeichnet, daß die elektronische Schaltung (3) bei einem Unterschreiten eines bestimmten Wertes der Versorgungsspannung automatisch die geschlossenen Räume (32, 33) öffnet.

14. Fahrzeug nach einem oder mehreren der vorhergehenden Ansprüche, dadurch gekennzeichnet, daß die elektronische Schaltung (3) ein Anzeige- und Warngerät (4) enthält, das die gemessenen Gaskonzentrationen auf einer Anzeige (5) zeigt und daß das Warngerät (4) optische und/oder ak ustische Warneinrichtungen (7, 12) enthält.

15. Fahrzeug nach einem oder mehreren der vorhergehenden Ansprüche, dadurch gekennzeichnet, daß die elektronische Schaltung (3) ein Steuergerät (15) und eine damit verbundene zentrale Karosserieelektronik (17) aufweist.

16. Fahrzeug nach einem oder mehreren der vorgehenden Ansprüchen, dadurch gekennzeichnet, daß ein in der Nähe des Treibstofftankes (21) angeordneter Ventilblock (27) sämtliche zur Inertisierung, Betankung und Motorversorgung notwendigen Magnet- und Rückschlagventile enthält.

17. Fahrzeug nach einem oder mehreren der vorhergehenden Ansprüche, dadurch gekennzeichnet, daß das zweite Treibstoffversorgungssystem einen konventionellen Kraftstoff enthält, der über eine elektrisch ansteuerbare Pumpe (24) und eine Leitung (30) zum Motor (25) fließt.

18. Fahrzeug nach einem oder mehreren der vorhergehenden Ansprüche, dadurch gekennzeichnet, daß bei einer durch die Außenluft verursachten Schadstoff- und/oder Gaskonzentration die elektronische Schaltung (3) vorübergehend in Abhängigkeit vom Sauerstoffgehalt im Fahrgastraum (32) die Öffnungen des Fahrgastraumes (32) schließt.

## Claims

1. A motor vehicle (1) comprising a safety system comprising a fuel supply system incorporated in the vehicle and containing a combustible and/or poisonous fuel which can form an ignitable mixture with ambient air, the concentration of pollutant and/or fuel gas being measured by sensors (8, 9, 10), wherein fuel gases escape from the vehicle fuel supply system and each sensor (8, 9, 10) generates signals after a given concentration of unburnt fuel is reached, the sensors (8, 9, 10) being connected to an electronic circuit (3) which, depending on the measured fuel concentration, actuates the moving parts for closing the openings of vehicle compartments, characterised in that at least one sensor (8, 9, 10) is disposed in each compartment (32, 33) of the vehicle (1) at a place at which, as a result of the physical properties of the fuel and the spatial conditions, fuel gases and/or mixtures thereof with ambient air first collect, and simultaneously the removal of fuel from the leaky fuel supply system is switched off via an electronic circuit combined with a supply of fresh air to the otherwise closed compartments (32, 33) of the vehicle (1), and a switch-over is made to a second fuel supply system (23).

2. A vehicle according to claim 1, characterised in that the fuel in the first fuel supply system is hydrogen, the sensors (8, 9, 10) respond at a low content of hydrogen in the ambient air, and the sensors (8, 9, 10), via the electronic circuit (3), keep the hydrogen content in the passenger compartment below the explosion limit of 4%.

3. A vehicle according to claim 1 or 2, characterised in that the sensors (8, 9) are disposed in the boot (33) near the fuel tank (21).

4. A vehicle according to one or more of the preceding claims, characterised in that the sensor (10) is provided at the highest place in the passenger compartment (32).

5. A vehicle according to one or more of the preceding claims, characterised in that the sensor (8) is releasably disposed in the boot (33).

6. A vehicle according to one or more of the preceding claims, characterised in that at least one sensor is disposed on the vehicle (1) for measuring the concentration of pollutants in the outer air.

7. A vehicle according to one or more of the preceding claims, characterised in that adjusting means (18, 19, 20) are connected to the electronic circuit and, when a concentration of pollutants and/or gas is caused by the fuel escaping from the vehicle (1), open the openings of at least the respective compartment sufficiently widely.

8. A vehicle according to one or more of the preceding claims, characterised in that the electronic circuit (3) for ventilating the respective compartment (32, 33) switches on fans and/or ventilators.

9. A vehicle according to one or more of the preceding claims, characterised in that at least one additional sensor (11) is disposed on the vehicle (1) and generates signals in response to impermissible acceleration of the vehicle (1), and the sensor (11) is connected to the electronic circuit (3).

10. A vehicle according to one or more of the preceding claims, characterised in that, in response to a signal from the sensor (11), the electronic circuit (3) triggers the same ventilation procedure as in the case after detection of a concentration of pollutants and/or gas caused by fuel, and the doors are unlocked.

11. A vehicle according to one or more of the preceding claims, characterised in that, if the rear of the vehicle is unacceptably deformed, the boot hatch opens as a result of the construction alone.

12. A vehicle according to one or more of the preceding claims, characterised in that the electronic circuit (3) is constantly in operation and the electric power consumption of the electronic circuit (3) is so low that even ordinary vehicle parking times can be bridged.

13. A vehicle according to one or more of the preceding claims, characterised in that the electronic circuit (3) automatically opens the closed compartments (32, 33) if the supply voltage falls below a given value.

14. A vehicle according to one or more of the preceding claims, characterised in that the electronic circuit (3) contains an indicating and alarm device (4) which shows the measured gas concentration on an indicator (5), and the alarm device (4) contains optical and/or acoustic alarm means (7, 12).

15. A vehicle according to one or more of the preceding claims, characterised in that the electronic circuit (3) comprises a control device (15) connected to a central car-body electronic device (17).

16. A vehicle according to one or more of the preceding claims, characterised in that a valve unit (27) disposed near the fuel tank (21) contains all the solenoid and non-return valves necessary for inactivation, refuelling and supplying the engine.

17. A vehicle according to one or more of the preceding claims, characterised in that the second fuel supply system contains a conventional fuel which flows to the motor (25) via an electrically actuated pump (24) and a line (30).

18. A vehicle according to one or more of the preceding claims, characterised in that, in response to a concentration of pollutants and/or gas caused by the external air, the electronic circuit (3) temporarily closes the openings of the passenger compartment (32), depending on the oxygen content therein.

## Revendications

1. Véhicule automobile (1) équipé d'un système de sécurité avec un système d'alimentation en carburant intégré au véhicule et qui contient un carburant combustible et/ou nocif, et qui peut former un mélange inflammable avec l'air ambiant, la mesure de la concentration en matières nocives et/ou en gaz combustibles étant faite par des capteurs (8, 9, 10), les gaz combustibles s'échappant du système d'alimentation en carburant du véhicule et chaque capteur (8, 9, 10) générant des signaux à partir d'une concentration déterminée en carburant non brûlé, les capteurs (8, 9, 10) étant reliés à un circuit électronique (3) qui, en fonction de l'amplitude de la concentration mesurée en carburant actionne les parties mobiles qui ferment les ouvertures des volumes du véhicule, caractérisé en ce que :
dans les volumes (32, 33) du véhicule (1) on a chaque fois au moins un capteur (8, 9, 10) prévu à un emplacement où, du fait des propriétés physiques du carburant ainsi que des données liées au volume, s'accumulent en premier lieu les gaz du carburant et/ou des mélanges avec l'air ambiant et un circuit électronique (3) assure simultanément une alimentation en air frais des volumes (32, 33) du véhicule (1), par ailleurs fermés, en coupant la prise de carburant du système d'alimentation en carburant, non étanche, tout en assurant la commutation sur un second système d'alimentation de carburant (23).

2. Véhicule selon la revendication 1, caractérisé en ce que le carburant du premier système d'alimentation en carburant est de l'hydrogène, les capteurs (8, 9, 10) sont déclenchés dès qu'une faible teneur en hydrogène apparaît dans l'air ambiant et les capteurs (8, 9, 10) maintiennent la teneur en hydrogène à l'intérieur de l'habitacle en-dessous de la limite d'explosion de 4 % par le circuit électronique (3).

3. Véhicule selon les revendications 1 et 2, caractérisé en ce que les capteurs (9) sont montés à proximité du réservoir (21) dans le coffre à bagages (33).

4. Véhicule selon une ou plusieurs des revendications précédentes, caractérisé en ce que le capteur (10) est prévu au point le plus haut de l'habitacle (32) du véhicule.

5. Véhicule selon une ou plusieurs des revendications précédentes, caractérisé en ce que le capteur (8) est monté de façon amovible dans le coffre à bagages (33).

6. Véhicule selon une ou plusieurs des revendications précédentes, caractérisé en ce que le véhicule comporte au moins un capteur pour mesurer la concentration en matières nocives de l'air extérieur.

7. Véhicule selon une ou plusieurs des revendications précédentes, caractérisé en ce que les organes de commande (18, 19, 20) sont reliés au circuit électronique (3), ces organes ouvrant au moins suffisamment les ouvertures du volume concerné pour une concentration de matières nocives et/ou de gaz provenant du carburant, dans le véhicule (1).

8. Véhicule selon une ou plusieurs des revendications précédentes, caractérisé en ce que le circuit électronique (3) met en oeuvre des machines soufflantes et/ou des ventilateurs pour ventiler le volume concerné (32, 33).

9. Véhicule selon une ou plusieurs des revendications précédentes, caractérisé par au moins un autre capteur (11) équipant le véhicule (1) et qui en cas d'accélération d'amplitude inacceptable du véhicule (1) génère des signaux et le capteur (11) est relié au circuit électronique (3).

10. Véhicule selon une ou plusieurs des revendications précédentes, caractérisé en ce que pour un signal du capteur (11), le circuit électronique (3) déclenche les mêmes moyens de ventilation que lorsqu'est constatée une concentration en matières nocives et/ou en gaz provenant du carburant, et un déverrouillage des portières se produit.

11. Véhicule selon une ou plusieurs des revendications précédentes, caractérisé en ce qu'en cas de déformation accidentelle de l'arrière du véhicule, le volet du coffre à bagages s'ouvre grâce aux seules mesures constructives.

12. Véhicule selon une ou plusieurs des revendications précédentes, caractérisé en ce que le circuit électronique (3) fonctionne en permanence et la puissance électrique consommée par le circuit électronique (3) est tellement faible que cela peut se faire pendant les temps d'arrêt usuels du véhicule.

13. Véhicule selon une ou plusieurs des revendications précédentes, caractérisé en ce que le circuit électronique (3) ouvre automatiquement les volumes fermés (32, 33) en cas de dépassement d'une valeur déterminée de la tension d'alimentation.

14. Véhicule selon une ou plusieurs des revendications précédentes, caractérisé en ce que le circuit électronique (3) comporte un dispositif d'affichage et d'avertissement (4) qui indique les concentrations mesurées en gaz sur un moyen d'affichage (5) et le dispositif avertisseur (4) comporte des moyens avertisseurs optiques et/ou acoustiques (7, 12).

15. Véhicule selon une ou plusieurs des revendications précédentes, caractérisé en ce que le circuit électronique (3) comporte un appareil de commande (15) et une électronique centrale (17) de carrosserie, reliée à cet appareil de commande.

16. Véhicule selon une ou plusieurs des revendications précédentes, caractérisé en ce qu'un bloc à soupapes (27) situé à proximité du réservoir (21) comporte toutes les soupapes d'arrêt et les électrovannes nécessaires au passage à l'état inerte, au remplissage du réservoir et à l'alimentation du moteur.

17. Véhicule selon une ou plusieurs des revendications précédentes, caractérisé en ce que le second système d'alimentation en carburant contient un carburant classique qui est fourni par une pompe électrique (24) et une conduite (30) au moteur (25).

18. Véhicule selon une ou plusieurs des revendications précédentes, caractérisé en ce que pour une concentration en matières nocives et/ou en gaz provoquée par l'air extérieur, le circuit électronique (3) ferme provisoirement les ouvertures de l'habitacle (32) en fonction de la teneur en oxygène dans l'habitacle (32).
